# FASCICULE DE BREVET EUROPEEN

(11) **EP 3 788 243 B1**
(45) Date de publication et mention de la délivrance du brevet: **23.07.2025**
(21) Numéro de dépôt: 19710714.7
(22) Date de dépôt: 20.03.2019
(51) Int. Cl.: F02B 31/04, F02B 23/10, F02F 1/42, F02B 31/08

(54) **DISPOSITIF D'ADMISSION DE GAZ AVEC UNE INTERSECTION DU CONDUIT D'ADMISSION ET DE LA CALIBRATION DE SOUPAPE INCLINEE PAR RAPPORT A LA FACE FEU**
GASEINLASSVORRICHTUNG MIT EINEM GENEIGTEN ÜBERGANG ZWISCHEN DEM EINLASSKANAL UND DEM EINLASSVENTILSITZ IM VERGLEICH ZUR BRENNRAUMSFLÄCHE
GAS INTAKE DEVICE WITH AN INCLINED INTERSECTION BETWEEN RUNNER AND THE INTAKE VALVE SEAT IN COMPARISON WITH THE FACE OF THE COMBUSTION CHAMBER

(30) Priorité: 04.05.2018 FR 1853856
(43) Date de publication de la demande: 10.03.2021
(73) Titulaire: IFP Energies nouvelles, 92852 Rueil-Malmaison (FR)
(72) Inventeur: GAUTROT, Xavier, 92852 RUEIL-MALMAISON CEDEX (FR); TROST, Julien, 92852 RUEIL-MALMAISON CEDEX (FR); RITTER, Martin, 92852 RUEIL-MALMAISON CEDEX (FR); LECHARD, Christophe, 92852 RUEIL-MALMAISON CEDEX (FR)
(74) Mandataire: IFP Energies nouvelles
(86) Numéro de dépôt international: PCT/EP2019/056930
(87) Numéro de publication internationale: WO 2019/211040

(56) Documents cités:
- WO-A1-01/94770
- WO-A1-99/22125
- DE-C1- 10 128 500
- FR-A1- 2 902 464
- FR-A3- 2 780 093
- US-B1- 6 253 729

## Description

La présente invention concerne le domaine des dispositifs d'admission de gaz pour un moteur à combustion interne. La présente invention concerne en particulier les dispositifs d'admission de gaz permettant de générer un mouvement aérodynamique de gaz dans le cylindre du moteur.

Ce type de moteur comprend généralement au moins un cylindre, un piston coulissant dans ce cylindre en un mouvement rectiligne alternatif, des moyens d'admission d'un comburant, des moyens d'échappement de gaz brûlés, une chambre de combustion, et des moyens d'injection pour injecter un combustible.

Comme cela est généralement admis, lors de la conception d'un moteur, les contraintes de performances et d'émissions de polluants sont de plus en plus fortes et il convient donc de trouver de nouvelles solutions pour augmenter le rendement final du moteur.

L'augmentation du rendement de combustion est donc un point clé pour limiter les émissions polluantes à performances égales ou supérieures. Pour cela, l'utilisation de la totalité du carburant présent dans la chambre de combustion, par un comburant comprenant par exemple de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

De plus, afin d'assurer un bon rendement ainsi qu'une bonne vitesse de combustion il est souhaitable d'avoir un haut niveau de turbulence, et plus spécifiquement un haut niveau d'énergie cinétique turbulente, à l'instant de l'allumage du mélange carburé et au cours de la combustion qui suit.

Ce niveau de turbulence élevé peut être atteint grâce à l'emploi d'une aérodynamique d'admission particulière, le swumble. Ce type d'aérodynamique se caractérise par le fait que le mouvement macroscopique du mélange carburé est un composé de swirl (mouvement rotatif des gaz dans le cylindre autour d'un axe vertical cylindre) et de tumble (mouvement rotatif des gaz dans le cylindre selon un axe longitudinal moteur).

Le swirl, qui est un mouvement macroscopique de rotation du mélange carburé autour d'un axe colinéaire à l'axe du cylindre, se caractérise par une bonne conservation au cours du processus d'admission et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé.

Le tumble est lui aussi un mouvement macroscopique de rotation du mélange carburé mais autour d'un axe globalement perpendiculaire à l'axe du cylindre. Il a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion appropriée. Par ailleurs, ce mouvement est assez sensible à la géométrie de la chambre de combustion ainsi qu'à la loi de levée, aussi bien en termes d'étalement que hauteur de levée maximale.

L'utilisation du swumble permet de bénéficier des avantages des deux structures aérodynamiques détaillées ci-dessus et donc de bénéficier d'une excellente homogénéisation et d'une meilleure vitesse de combustion grâce à un niveau de turbulence plus élevée lors de la phase de compression que ce qu'on observe avec les meilleurs moteurs à allumage commandé actuels.

Différentes solutions techniques ont été développées pour réaliser ces écoulements turbulents dans le cylindre.

Une première solution est décrite notamment dans le brevet US6606975. Cette solution consiste à piloter un volet placé dans la conduite d'admission pour générer des turbulences. Ce brevet fait apparaître en outre la notion de swumble à faible charge. Une telle solution est complexe et pénalisante pour le remplissage du cylindre.

Une deuxième solution est décrite notamment dans le brevet US5056486. Cette solution propose une définition de conduits d'admission asymétriques permettant de générer une aérodynamique complexe. Toutefois, cette solution nécessite un déphasage des ouvertures des soupapes d'admission, ce qui est pénalisant à forte charge.

Une troisième solution est décrite notamment dans les demandes de brevet DE10128500 et EP1783341. Cette solution permet de générer une aérodynamique complexe à l'aide d'appendices passifs ou actifs dans le conduit d'admission. Dans les deux cas, ces appendices limitent le remplissage du cylindre en gaz. De plus, les appendices actifs nécessitent une commande rendant la solution complexe.

La demande de brevet WO 99/22125 A1 décrit un moteur à injection directe et allumage commandé.

La demande de brevet FR 2780093 A3 décrit un mécanisme de prédistribution pour soupape dans un ensemble culasse-moteur/piston.

La demande de brevet EP 2902464 A1 décrit un dispositif d'admission d'air dans un cylindre moteur.

Pour pallier ces inconvénients, la présente invention concerne un dispositif d'admission de gaz pour un cylindre d'un moteur à combustion interne. Le dispositif d'admission de gaz comporte un conduit d'admission, une soupape d'admission, une calibration de la soupape d'admission, des moyens pour former un mouvement aérodynamique du gaz du type tumble dans le cylindre. En outre, l'intersection entre le conduit d'admission et la calibration se fait selon une droite non parallèle au plan de la face feu. Cette inclinaison permet de générer un mouvement aérodynamique du type swirl dans le cylindre, qui se combine au tumble pour former un mouvement aérodynamique du type swumble.

### Le dispositif selon l'invention

La présente invention concerne un dispositif d'admission de gaz pour un cylindre d'un moteur à combustion interne, ledit dispositif d'admission de gaz comprenant un conduit d'admission, au moins une soupape d'admission disposée au sein dudit conduit d'admission, au moins une calibration de ladite soupape d'admission disposée à une extrémité dudit conduit d'admission et dirigée vers la face feu dudit cylindre, et des moyens de déviation dudit gaz pour générer un mouvement aérodynamique dudit gaz au sein dudit cylindre autour d'un axe sensiblement perpendiculaire à l'axe dudit cylindre. A l'intrados dudit conduit d'admission, l'intersection entre ledit conduit d'admission et ladite calibration de ladite soupape d'admission est sur une génératrice formant un angle α compris entre 10 et 20° par rapport à un plan parallèle à ladite face feu dudit cylindre passant par un point d'intersection entre ledit conduit d'admission et ladite calibration.

Selon un mode de réalisation, ledit angle α est compris entre 13 et 17°.

Conformément à une mise en œuvre de l'invention, lesdits moyens de déviation dudit gaz sont constitués par la forme dudit conduit d'admission.

Selon un aspect, lesdits moyens de déviation dudit gaz comprennent une forme de tremplin sur le profil inférieur dudit conduit d'admission.

Avantageusement, lesdits moyens de déviation dudit gaz comprennent une convergence de la section de passage dudit conduit d'admission à proximité de ladite calibration de ladite soupape.

De manière avantageuse, lesdits moyens de déviation dudit gaz comprennent une inclinaison dudit conduit d'admission définie par un angle β de tangente au point d'intersection dudit conduit d'admission avec ladite calibration compris entre 0 et 45°.

Selon une caractéristique, ledit conduit d'admission comporte deux sorties de gaz vers ledit cylindre et deux soupapes d'admission.

De plus, l'invention concerne un moteur à combustion interne comportant au moins un cylindre pourvu au moins d'un dispositif d'admission selon l'une des caractéristiques précédentes, d'au moins un dispositif d'échappement, et des moyens d'injection de carburant.

Selon un mode de réalisation, lesdits moyens d'injection de carburant sont disposés dans ledit cylindre.

Conformément à une mise en œuvre, lesdits moyens d'injection de carburant sont disposés dans ledit dispositif d'admission.

En outre, l'invention concerne l'utilisation d'un moteur à combustion interne selon l'une des caractéristiques précédentes pour un cycle de Miller ou un cycle d'Atkinson.

### Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1 illustre un dispositif d'admission de gaz selon un mode de réalisation de l'invention dans une vue de côté.
La figure 2 illustre un dispositif d'admission de gaz selon un mode de réalisation de l'invention dans une vue tridimensionnelle.
Les figures 3a et 3b sont des vues de l'intrados d'un dispositif d'admission de gaz respectivement selon l'art antérieur et selon l'invention.
La figure 4 illustre des courbes du nombre de tumble, de l'énergie cinétique turbulente (TKE), du nombre de swirl dans le cadre d'une loi standard pour un dispositif d'admission selon l'art antérieur et pour un dispositif d'admission selon un mode de réalisation de l'invention.
La figure 5 illustre des courbes du nombre de tumble, de l'énergie cinétique turbulente (TKE), du nombre de swirl dans le cadre d'une loi Miller pour un dispositif d'admission selon l'art antérieur et pour un dispositif d'admission selon un mode de réalisation de l'invention.
La figure 6 illustre un cylindre d'un moteur à combustion interne selon un mode de réalisation de l'invention.

### Description détaillée de l'invention

La présente invention concerne un dispositif d'admission de gaz pour un cylindre d'un moteur à combustion interne.

Le dispositif d'admission de gaz comporte :
- un conduit d'admission de gaz pour l'admission d'un gaz dans un cylindre,
- une soupape d'admission insérée dans le conduit d'admission, l'ouverture de la soupape permettant l'entrée du gaz dans le cylindre,
- une pièce de calibration de la soupape d'admission disposée à l'extrémité de la soupape d'admission vers le cylindre, la calibration étant dirigée vers la face feu du cylindre, la calibration de la soupape d'admission est une pièce mécanique sensiblement cylindrique dans laquelle se déplace la soupape,
- des moyens de déviation du gaz pour générer un mouvement aérodynamique du gaz au sein du cylindre selon une direction perpendiculaire à l'axe du cylindre, en d'autres termes des moyens pour former un mouvement aérodynamique du gaz de type tumble.

On appelle face feu ou face combustion, le plan inférieur de la culasse (du moteur à combustion interne) orthogonal à l'axe du cylindre. La calibration de la soupape est insérée dans le plan inférieur de la culasse de manière à alimenter le cylindre en gaz.

Selon l'invention, le dispositif d'admission est formé de telle sorte que, à l'intrados dudit conduit d'admission, l'intersection entre le conduit d'admission et la calibration de la soupape, est sur une génératrice formant un angle α compris entre 10 et 20°, par rapport à un plan parallèle à la face feu et passant par un point d'intersection entre le conduit d'admission et la calibration de la soupape. On appelle intrados du conduit d'admission, la face inférieure du conduit d'admission. Ainsi, l'intersection de la face inférieure du conduit d'admission avec la calibration de soupape est inclinée par rapport à un plan parallèle à la face feu. Cette inclinaison permet une déviation du gaz à l'entrée de la calibration, et a fortiori à l'entrée du cylindre. Cette déviation de gaz forme un mouvement aérodynamique du gaz dans le cylindre selon une direction parallèle à l'axe du cylindre, en d'autres termes un mouvement aérodynamique du gaz de type swirl. Cette inclinaison peut se traduire par une rotation du conduit d'admission au niveau de son extrémité (l'extrémité du conduit d'admission est alors vrillée), ce qui favorise le mouvement aérodynamique du gaz de type swirl. De plus, cette réalisation permet de réaliser un mouvement aérodynamique du gaz de type swirl sans aucun appendice particulier de type masque, volet ou lame. De plus, l'architecture de ces dispositifs d'admission ne présente aucune contrainte supplémentaire pour une implantation dans une culasse de moteur à combustion interne monocylindre ou multicylindre.

De manière générale, une inclinaison selon un angle α compris entre 5 et 45° permet la génération un mouvement aérodynamique du gaz de type swirl. En dessous de 5°, l'inclinaison est insuffisante pour avoir une influence significative sur le mouvement aérodynamique du gaz dans le cylindre. Au-delà de 45°, la géométrie du conduit d'admission est complexe et difficile à réaliser.

Par combinaison des mouvements aérodynamiques du gaz de type tumble et de type swirl, le dispositif d'admission du gaz selon l'invention permet un mouvement aérodynamique du gaz de type swumble dans le cylindre, ce qui permet de bénéficier d'une excellente homogénéisation et d'une meilleure vitesse de combustion grâce à un niveau de turbulence plus élevé lors de la phase de compression que ce qu'on observe avec les meilleurs moteurs à allumage commandé actuels.

Le gaz est un comburant ou un mélange carburé (cas de l'injection indirecte), et peut comprendre notamment de l'air à pression ambiante, de l'air suralimenté, un mélange d'air (suralimenté ou non) et de gaz brûlés.

Selon l'invention, l'angle α est compris entre 10 et 20°, et de manière préférée entre 13 et 17°. Ces plages angulaires permettent d'optimiser le mouvement aérodynamique du gaz de type swirl, et ainsi d'optimiser les mouvements aérodynamiques du gaz combinées de type swumble.

Conformément à une mise en œuvre de l'invention, les moyens de déviation du gaz sont constitués uniquement par la forme du conduit d'admission. Ainsi, aucun élément actif ou passif ne vient entraver le passage du gaz dans le conduit d'admission.

Selon un premier exemple de réalisation, les moyens de déviation du gaz peuvent comprendre une forme de tremplin sur le profil inférieur du conduit d'admission. La forme de tremplin favorise le décollement du flux de gaz dans le conduit d'admission et le dirige vers la partie supérieure du conduit d'admission et donc vers la partie supérieure du cylindre afin de maximiser le mouvement aérodynamique du gaz de type tumble.

Selon un deuxième exemple de réalisation (pouvant être combiné avec le premier exemple de réalisation), les moyens de déviation du gaz peuvent comprendre une convergence de la section de passage à proximité de la calibration de la soupape. En d'autres termes la section de passage du conduit d'admission réduit vers son extrémité proche de la calibration de la soupape. Cette convergence entraîne une accélération du flux de gaz favorable aux aspects remplissage et mouvement aérodynamique du gaz.

Selon un troisième exemple de réalisation (pouvant être combiné avec le premier et/ou le deuxième exemple de réalisation), les moyens de déviation du gaz peuvent comprendre une inclinaison du conduit d'admission. Cette inclinaison du conduit d'admission peut être définie par un angle β de tangente au point d'intersection du conduit d'admission avec la calibration comprise entre 0 et 45°. Cette inclinaison peut être couplée à la pente de la partie supérieure de la chambre de combustion du cylindre. L'inclinaison du conduit d'admission permet d'incliner le flux de gaz entrant dans le cylindre pour former un mouvement aérodynamique du gaz de type tumble. Par exemple, une optimisation du mouvement aérodynamique de gaz de type tumble peut être atteinte par une tangence entre l'angle β et l'angle de la pente de la partie supérieure de la chambre de combustion.

Selon un aspect de l'invention, le dispositif d'admission de gaz peut être de type siamois. En d'autres termes, le conduit d'admission comporte une entrée et deux sorties dirigées vers le cylindre, chacune des sorties comportant une soupape d'admission et une calibration de soupape d'admission. Chaque sortie comporte les caractéristiques angulaires définies pour former un mouvement aérodynamique du gaz de type swirl. Ce type de dispositif d'admission, adapté pour les cylindres pourvus de deux soupapes d'admission, permet de simplifier la conception du plénum d'admission (le plénum d'admission est le volume en amont des conduits d'admission).

Selon un aspect de l'invention, bien que les moyens de déviation du gaz sont constitués uniquement par la forme du conduit d'admission, la compatibilité avec des éléments actifs ou passifs de déviation des gaz tels que des masques admission est assurée. Ainsi, le dispositif d'admission peut comprendre en outre un masque d'admission formé dans la chambre de combustion. Se définit comme masque d'admission, un usinage spécifique dans la chambre de combustion à proximité de l'emplacement des sièges de soupapes admission, qui permet de bloquer le passage sur une partie de la section de passage du conduit d'admission au niveau du siège afin d'accélérer les gaz et donc augmenter la turbulence dans la chambre de combustion.

Selon l'invention, la section de passage du conduit d'admission a une forme sensiblement rectangulaire, avec les coins arrondis. Dans ce cas, l'intersection du conduit d'admission et la calibration de la soupape est formée par quatre arêtes : une du côté de l'intrados, une sur la face avant, et deux latérales.

Selon l'invention, la section de passage rectangulaire du conduit d'admission au niveau de l'intersection avec la calibration de soupape est inclinée par rapport à la direction de la face feu. En d'autres termes, aucune des arrêtes de la section de passage rectangulaire n'est parallèle ou perpendiculaire à une direction parallèle à la face feu..

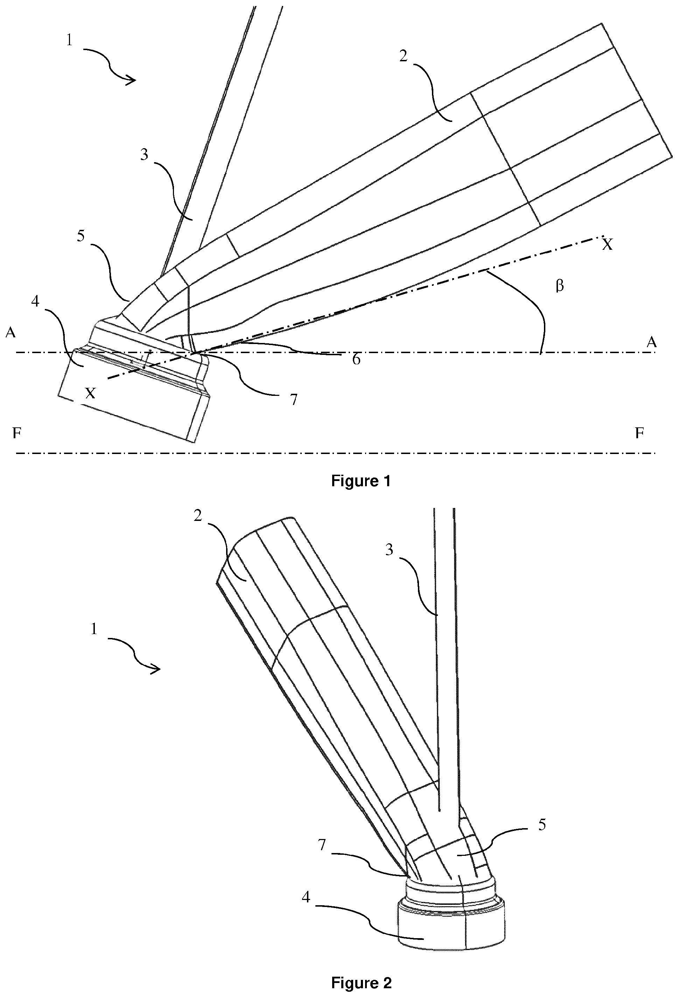

Les figures 1 et 2 illustrent, schématiquement et de manière non limitative, un dispositif d'admission 1 selon un mode de réalisation de l'invention. La figure 1 est une vue de côté, et la figure 2 est une vue tridimensionnelle du dispositif d'admission 1. Le dispositif d'admission 1 comporte un conduit d'admission 2, une soupape 3 introduite dans le conduit d'admission, et une calibration 4 de la soupape d'admission. L'extrémité de la soupape d'admission 3 assurant le passage du gaz pour son ouverture n'est pas représentée.

Le dispositif d'admission 1 comporte en outre des moyens de déviation du gaz pour générer un mouvement aérodynamique du gaz au sein du cylindre selon une direction perpendiculaire à l'axe du cylindre (mouvement aérodynamique du gaz de type tumble). Ces moyens de déviation du gaz comportent une convergence 5 de la section de passage du conduit d'admission 2 à proximité de la calibration 4 de la soupape. Cette convergence 5 correspond à une réduction de la section de passage à proximité de la calibration 4 de soupape. De plus, les moyens de déviation du gaz comprennent un tremplin 6 formé sur le profil inférieur du conduit d'admission 2. En outre, les moyens de déviation du gaz comprennent l'inclinaison du conduit d'admission 2 selon un angle β, en une direction XX de tangente au point d'intersection du conduit d'admission avec la calibration, et une direction AA horizontale.

Sur cette figure est représenté également une droite FF appartenant au plan de la face feu. La direction AA est parallèle à la droite FF.

L'intersection entre le conduit d'admission 2 et la calibration 4 au niveau de l'intrados du conduit d'admission est notée par la référence 7.

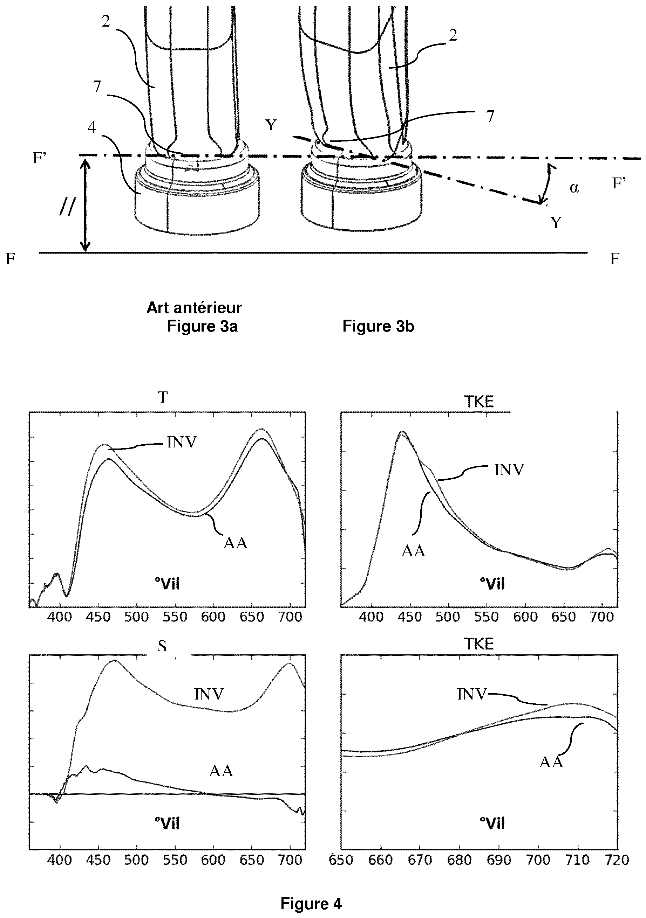

Les figures 3a et 3b illustrent, schématiquement et de manière non limitative, des vues de l'intrados (face inférieure) du dispositif d'admission de gaz. Les figures 3a et 3b sont dans un plan perpendiculaire à la face feu. La figures 3a correspond à un dispositif selon l'art antérieur possédant uniquement des moyens de déviation du gaz pour former un mouvement aérodynamique du gaz de type tumble. La figure 3b correspond à un dispositif selon l'invention avec des moyens de déviation du gaz pour former un mouvement aérodynamique du gaz de type tumble et, au niveau de l'intrados, une inclinaison de l'intersection entre le conduit d'admission et la calibration de soupape.

Sur ces figures, la droite FF illustre le plan de la face feu (définie par le cylindre), et la direction F'F' est une droite appartenant à un plan parallèle à la face feu FF passant par un point d'intersection entre le conduit d'admission 2 et la calibration 4 de la soupape d'admission.

Selon l'art antérieur illustré sur la figure 3a, l'intersection 7 entre le conduit d'admission 2 et la calibration 4 de la soupape d'admission est confondue avec la droite F'F'.

Au contraire, selon l'invention illustrée sur la figure 3b, l'intersection 7 entre le conduit d'admission 2 et la calibration 4 de la soupape d'admission est portée par une génératrice d'axe YY inclinée d'un angle α par rapport à la droite F'F'. Cet angle α est compris entre 5 et 45°. On peut observer sur la figure 3b que cette inclinaison entraîne une légère rotation du conduit d'admission 2, qui a une section de passage sensiblement rectangulaire.

L'invention concerne également un ensemble comprenant un cylindre d'un moteur à combustion interne et dispositif d'admission selon l'une des variantes ou des combinaisons de variantes décrites précédemment.

De plus, la présente invention concerne un moteur à combustion interne comportant au moins un cylindre, chaque cylindre étant pourvu :
- d'au moins un dispositif d'admission selon l'une des variantes ou combinaison de variantes décrites précédemment, pour l'admission d'un gaz dans le cylindre,
- d'au moins un dispositif d'échappement, pour évacuer les gaz brulés du cylindre, le dispositif d'échappement est avantageusement équipé d'une soupape d'échappement,
- d'un piston ayant un mouvement de translation rectiligne alternatif dans le cylindre pour générer une énergie mécanique à partir de la combustion (par rotation d'un vilebrequin),
- de moyens d'injection de carburant, pour générer une combustion.

Selon un mode de réalisation, les moyens d'injection de carburant peuvent être des moyens d'injection directe, c'est-à-dire que les moyens d'injection de carburant sont disposés directement dans le cylindre.

Alternativement, les moyens d'injection de carburant peuvent être des moyens d'injection indirecte, c'est-à-dire que les moyens d'injection de carburant sont disposés dans le dispositif d'admission.

Selon une mise en œuvre de l'invention, le moteur à combustion interne est un moteur à allumage commandé. Dans ce cas, le moteur comporte en outre au moins une bougie pour générer la combustion du mélange gaz et carburant.

Alternativement, le moteur à combustion interne est un moteur à allumage par compression. Dans ce cas, le moteur ne comporte aucune bougie pour générer la combustion du mélange gaz et carburant.

Selon un aspect de l'invention, lorsque les cylindres comportent deux conduits d'admission, ces deux conduits peuvent être identiques et parallèles par rapport au plan médian de la chambre de combustion.

En variante, les cylindres peuvent être alimentés en gaz par un dispositif d'admission siamois.

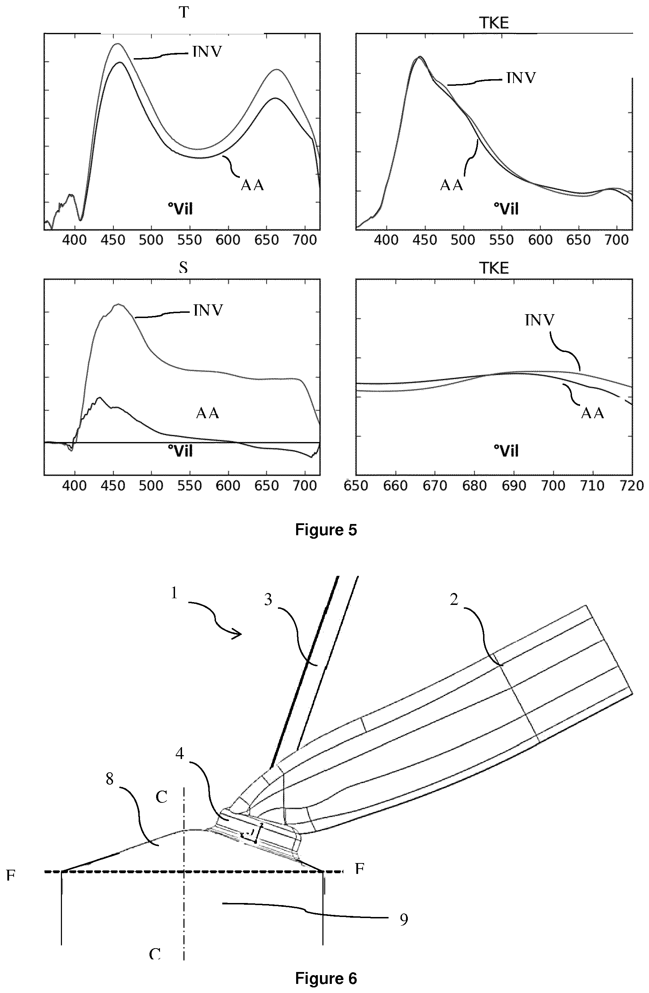

La figure 6 illustre, schématiquement et de manière non limitative, une vue partielle d'un cylindre d'un moteur à combustion interne selon un mode de réalisation, l'invention. Le cylindre 9, dans lequel se déplace un piston (non représenté) comporte une chambre de combustion 8. Un dispositif d'admission 1, en particulier la calibration de la soupape 4, est disposé dans la chambre de combustion 8. Un dispositif d'échappement (non représenté) est également disposé dans la chambre de combustion 8.

La direction axiale du cylindre 9 est notée CC. Sur cette figure, est représentée également la face feu FF, qui est perpendiculaire à l'axe CC, la face feu FF correspondant à la partie inférieure de la culasse (non représentée) du moteur à combustion interne.

Le dispositif d'admission 1 est identique au dispositif d'admission des figures 1, 2 et 3b, et comporte notamment un conduit d'admission 2, une soupape 3, et une calibration de soupape 4.

En outre, la présente invention concerne l'utilisation d'un moteur à combustion interne selon l'une des variantes ou combinaison de variantes décrites précédemment selon un cycle de Miller ou un cycle d'Atkinson.

Le cycle de Miller est un cycle thermodynamique se caractérisant par une fermeture de la ou des soupapes d'admission avant le point mort bas du piston lors de la phase admission. Cela permet d'avoir un travail récupéré plus important en plus d'un refroidissement de la charge admise. Le dispositif d'admission selon l'invention est particulièrement adapté pour une utilisation en cycle dit Miller sur une plage étendue de fonctionnement grâce à la génération d' un mouvement aérodynamique du gaz de type swumble.

Le cycle d'Atkinson est le cycle thermodynamique standard utilisé dans les moteurs à combustion variable.

Le moteur à combustion interne selon l'invention peut être utilisé dans le domaine des applications embarquées, tels que les domaines routier, maritime ou aéronautique, ou dans le domaine des installations stationnaires, comme un groupe électrogène.

### Exemples comparatifs

Les avantages et les caractéristiques du dispositif d'admission selon l'invention ressortiront des exemples comparatifs ci-dessous.

Pour ces exemples, on compare les caractéristiques d'un moteur à combustion interne équipé d'un dispositif d'admission selon l'art antérieur et réalisant uniquement un mouvement aérodynamique du gaz de type tumble (correspondant à la figure 3a), avec le même moteur à combustion interne équipé d'un dispositif d'admission selon l'invention et réalisant un mouvement aérodynamique du gaz de type swumble (correspondant à la figure 3b). Pour cet exemple, l'angle α vaut 15 °.

La figure 4 représente les courbes du nombre de tumble T (en haut à gauche), de l'énergie cinétique turbulente TKE (de l'anglais Turbulent Kinetic Energy) (en haut à droite), du nombre de swirl S (en bas à gauche) en fonction de l'angle vilebrequin °Vil pour une partie du cycle moteur du point mort bas admission (360°) au point mort haut compression (720°). La figure en bas à droite illustre l'énergie cinétique turbulente TKE pour une zone réduite de plage angulaire de l'angle vilebrequin °Vil à proximité de la combustion qui a lieu après le point mort haut compression (720° de l'angle vilebrequin). Le nombre de tumble dans une direction x est défini comme le ratio de la vitesse angulaire du gaz autour du centre de masse dans la direction x (direction perpendiculaire à l'axe du cylindre) par rapport à la vitesse angulaire du vilebrequin. Le nombre de swirl est défini comme le ratio de la vitesse angulaire du gaz autour du centre de masse dans la direction de l'axe du cylindre, par rapport à la vitesse angulaire du vilebrequin. Le nombre de tumble et le nombre de swumble sont des nombres sans dimension.

La figure 4 concerne un cycle standard. Sur ces figures, les courbes correspondant au moteur à combustion interne équipé d'un dispositif d'admission selon l'art antérieur sont notées AA, et les courbes correspondant au moteur à combustion interne équipé d'un dispositif d'admission selon l'invention sont notées INV.

L'énergie cinétique turbulente TKE représente la quantité d'énergie "enfermée" dans la masse d'air.

On remarque sur ces figures, que les deux dispositifs d'admission permettent de générer un mouvement aérodynamique de type tumble (nombre de tumble T élevée). De plus, on remarque que le nombre de swirl S est beaucoup plus élevé pour le dispositif d'admission selon l'invention INV. Par conséquent, l'inclinaison de l'intersection entre le conduit d'admission et la calibration permet bien de générer un mouvement aérodynamique de type swirl. Le dispositif selon l'invention permet donc bien de générer un mouvement aérodynamique de type swumble (existence de tumble et de swirl). En outre, on remarque que le dispositif d'admission selon l'invention offre un gain sur l'énergie cinétique turbulente TKE par rapport à l'art antérieur, en permettant une augmentation de cette énergie turbulente avant la combustion.

La figure 5 représente les courbes du nombre de tumble T (en haut à gauche), de l'énergie cinétique turbulente TKE (de l'anglais Turbulent Kinetic Energy) (en haut à droite), du nombre de swirl S (en bas à gauche) en fonction de l'angle vilebrequin °Vil pour une partie du cycle moteur du point mort bas admission (360°) au point mort haut compression (720°). La figure en bas à droite illustre l'énergie cinétique turbulente TKE pour une zone réduite de plage angulaire de l'angle vilebrequin °Vil à proximité de la combustion qui a lieu après le point mort haut compression (720° de l'angle vilebrequin). La figure 5 concerne un cycle de Miller. Sur ces figures, les courbes correspondant au moteur à combustion interne équipé d'un dispositif d'admission selon l'art antérieur sont notées AA, et les courbes correspondant au moteur à combustion interne équipé d'un dispositif d'admission selon l'invention sont notées INV.

On remarque sur ces figures, que les deux dispositifs d'admission permettent de générer un mouvement aérodynamique du gaz de type tumble (nombre de tumble T élevé). De plus, on remarque que le nombre de swirl S est beaucoup plus élevé pour le dispositif d'admission selon l'invention INV. Par conséquent, l'inclinaison de l'intersection entre le conduit d'admission et la calibration permet bien de générer un mouvement aérodynamique du gaz de type swirl. Le dispositif selon l'invention permet donc bien de générer un mouvement aérodynamique de type swumble (existence de tumble et de swirl). En outre, on remarque que le dispositif d'admission selon l'invention offre un gain sur le l'énergie cinétique turbulente TKE par rapport à l'art antérieur, en permettant une augmentation de cette énergie turbulente avant la combustion.

Ainsi, la génération d'un mouvement aérodynamique du gaz de type swirl permet de mieux conserver l'énergie contenue dans le mouvement aérodynamique lors de l'admission d'un cycle moteur. Ainsi le niveau de turbulence à l'initiation de la combustion est supérieur à celui des conduits purement tumble, surtout pour des lois de levées adaptées au fonctionnement en cycle de Miller.

Des gains en rendement de combustion significatifs sont obtenus avec l'implantation des dispositifs d'admission selon l'invention. De plus, l'architecture de ces dispositifs d'admission ne présente aucune contrainte supplémentaire pour une implantation dans une culasse de moteur monocylindre ou multicylindre. Ce qui est un avantage notable en comparaison des solutions existantes pour obtenir du swumble.

## Revendications

1. Dispositif d'admission de gaz pour un cylindre d'un moteur à combustion interne, ledit dispositif d'admission de gaz (1) comprenant un conduit d'admission (2), au moins une soupape d'admission (3) disposée au sein dudit conduit d'admission (2), au moins une calibration (4) de ladite soupape d'admission (2) disposée à une extrémité dudit conduit d'admission (2) et dirigée vers la face feu (FF) dudit cylindre, et des moyens de déviation dudit gaz (5, 6) pour générer un mouvement aérodynamique dudit gaz au sein dudit cylindre autour d'un axe sensiblement perpendiculaire à l'axe dudit cylindre,
le dispositif étant **caractérisé par**
la section de
passage dudit conduit ayant une forme sensiblement rectangulaire avec les coins arrondis
et
en ce que, à l'intrados dudit conduit d'admission (2), l'intersection (7) entre ledit conduit d'admission (2) et ladite calibration (4) de ladite soupape d'admission (3) est sur une génératrice (YY) formant un angle α compris entre 10 et 20° par rapport à un plan (F'F') parallèle à ladite face feu (FF) dudit cylindre passant par un point d'intersection (7) entre ledit conduit d'admission (2) et ladite calibration (4), de manière à ce que l'extrémité du conduit d'admission est alors vrillée.

2. Dispositif d'admission selon la revendication 1, dans lequel ledit angle α est compris entre 13 et 17°.

3. Dispositif d'admission selon l'une des revendications précédentes, dans lequel lesdits moyens de déviation dudit gaz (5, 6) sont constitués par la forme dudit conduit d'admission (2).

4. Dispositif d'admission selon l'une des revendications précédentes, dans lequel lesdits moyens de déviation dudit gaz comprennent une forme de tremplin (6) sur le profil inférieur dudit conduit d'admission (2).

5. Dispositif d'admission selon l'une des revendications précédentes, dans lequel lesdits moyens de déviation dudit gaz comprennent une convergence (5) de la section de passage dudit conduit d'admission (2) à proximité de ladite calibration (4) de ladite soupape (3).

6. Dispositif d'admission selon l'une des revendications précédentes, dans lequel lesdits moyens de déviation dudit gaz comprennent une inclinaison dudit conduit d'admission (2) définie par un angle β de tangente au point d'intersection dudit conduit d'admission (2) avec ladite calibration (4) compris entre 0 et 45°.

7. Dispositif d'admission selon l'une des revendications précédentes, dans lequel ledit conduit d'admission (2) comporte deux sorties de gaz vers ledit cylindre et deux soupapes d'admission (3).

8. Dispositif d'admission selon l'une des revendications précédentes, dans lequel ledit dispositif d'admission comporte un masque d'admission.

9. Moteur à combustion interne comportant au moins un cylindre pourvu au moins d'un dispositif d'admission (1) selon l'une des revendications précédentes, d'au moins un dispositif d'échappement, et des moyens d'injection de carburant.

10. Moteur à combustion interne selon la revendication 9, dans lequel lesdits moyens d'injection de carburant sont disposés dans ledit cylindre.

11. Moteur à combustion interne selon la revendication 9, dans lequel lesdits moyens d'injection de carburant sont disposés dans ledit dispositif d'admission (1).

12. Utilisation d'un moteur à combustion interne selon l'une des revendications 9 à 11 pour un cycle de Miller ou un cycle d'Atkinson.

## Patentansprüche

1. Gaseinlassvorrichtung für einen Zylinder einer Brennkraftmaschine, wobei die Gaseinlassvorrichtung (1) einen Einlasskanal (2), mindestens ein innerhalb des Einlasskanals (2) angeordnetes Einlassventil (3), mindestens ein Kalibrierelement (4) des Einlassventils (2), das an einem Ende des Einlasskanals (2) angeordnet und zur Brennseite (FF) des Zylinders gerichtet ist, und Mittel zur Ablenkung des Gases (5, 6), um eine aerodynamische Bewegung des Gases innerhalb des Zylinders um eine zu der Achse des Zylinders im Wesentlichen rechtwinklige Achse zu erzeugen, umfasst, wobei die Vorrichtung durch den Durchlassquerschnitt des Kanals (2) gekennzeichnet ist, der eine im Wesentlichen rechteckige Form mit abgerundeten Ecken hat, und dadurch, dass an der inneren Wölbfläche des Einlasskanals die Schnittstelle (7) zwischen dem Einlasskanal (2) und dem Kalibrierelement (4) des Einlassventils (3) auf einer Erzeugenden (YY) liegt, die einen Winkel α zwischen 10 und 20° in Bezug auf eine zu der Brennseite (FF) des Zylinders parallele Ebene (F'F') bildet, die durch einen Schnittpunkt (7) zwischen dem Einlasskanal (2) und dem Kalibrierelement (4) verläuft, so dass das Ende des Einlasskanals verdreht ist.

2. Einlassvorrichtung nach Anspruch 1, wobei der Winkel α zwischen 13 und 17° beträgt.

3. Einlassvorrichtung nach einem der vorhergehenden Ansprüche, wobei die Mittel zur Ablenkung des Gases (5, 6) durch die Form des Einlasskanals (2) gebildet werden.

4. Einlassvorrichtung nach einem der vorhergehenden Ansprüche, wobei die Mittel zur Ablenkung des Gases eine Sprungschanzenform (6) an dem unteren Profil des Einlasskanals (2) umfassen.

5. Einlassvorrichtung nach einem der vorhergehenden Ansprüche, wobei die Mittel zur Ablenkung des Gases eine Konvergenz (5) des Durchlassquerschnitts des Einlasskanals (2) in der Nähe des Kalibrierelements (4) des Ventils (3) umfassen.

6. Einlassvorrichtung nach einem der vorhergehenden Ansprüche, wobei die Mittel zur Ablenkung des Gases eine Neigung des Einlasskanals (2) umfassen, die durch einen Winkel β der Tangente am Schnittpunkt des Einlasskanals (2) mit dem Kalibrierelement (4) zwischen 0 und 45° definiert ist.

7. Einlassvorrichtung nach einem der vorhergehenden Ansprüche, wobei der Einlasskanal (2) zwei Gasauslässe zu dem Zylinder hin und zwei Einlassventile (3) aufweist.

8. Einlassvorrichtung nach einem der vorhergehenden Ansprüche, wobei die Einlassvorrichtung eine Einlassmaske aufweist.

9. Brennkraftmaschine, die mindestens einen Zylinder aufweist, der mindestens mit einer Einlassvorrichtung (1) nach einem der vorhergehenden Ansprüche, mindestens einer Abgasvorrichtung und Kraftstoffeinspritzmitteln versehen ist.

10. Brennkraftmaschine nach Anspruch 9, wobei die Kraftstoffeinspritzmittel in dem Zylinder angeordnet sind.

11. Brennkraftmaschine nach Anspruch 9, wobei die Kraftstoffeinspritzmittel in der Einlassvorrichtung (1) angeordnet sind.

12. Verwendung einer Brennkraftmaschine nach einem der Ansprüche 9 bis 11 für einen Miller-Zyklus oder einen Atkinson-Zyklus.

## Claims

1. Gas intake device for a cylinder of an internal-combustion engine, said gas intake device (1) comprising an intake duct (2), at least one intake valve (3) arranged within said intake duct (2), at least one calibration part (4) of said intake valve (2) positioned at one end of said intake duct (2) and facing towards the combustion face (FF) of said cylinder, and means (5, 6) for deflecting said gas to generate an aerodynamic movement of said gas within said cylinder about an axis substantially perpendicular to the axis of said cylinder, the device being **characterized in that** the passage section of said duct has a substantially rectangular shape with rounded corners, and **in that**, on the intrados of said intake duct (2), the intersection (7) between said intake duct (2) and said calibration part (4) of said intake valve (3) is on a generatrix (YY) forming an angle α of between 10° and 20° with respect to a plane (F'F') parallel to said combustion face (FF) of said cylinder and passing through an intersection point (7) between said intake duct (2) and said calibration part (4), such that the end of the intake duct is then twisted.

2. Intake device according to Claim 1, wherein said angle α is between 13° and 17°.

3. Intake device according to one of the preceding claims, wherein said means (5, 6) for deflecting said gas are formed by the shape of said intake duct (2).

4. Intake device according to one of the preceding claims, wherein said means for deflecting said gas comprise a ski-jump shape (6) on the lower profile of said intake duct (2).

5. Intake device according to one of the preceding claims, wherein said means for deflecting said gas comprise a convergence (5) of the passage section of said intake duct (2) in the vicinity of said calibration part (4) of said valve (3).

6. Intake device according to one of the preceding claims, wherein said means for deflecting said gas comprise an incline of said intake duct (2) defined by a tangent angle β at the intersection point of said intake duct (2) with said calibration part (4) of between 0° and 45°.

7. Intake device according to one of the preceding claims, wherein said intake duct (2) includes two gas outlets leading to said cylinder and two intake valves (3) .

8. Intake device according to one of the preceding claims, wherein said intake device includes an intake screen.

9. Internal-combustion engine including at least one cylinder provided at least with an intake device (1) according to one of the preceding claims, at least one exhaust device, and fuel injection means.

10. Internal-combustion engine according to Claim 9, wherein said fuel injection means are arranged in said cylinder.

11. Internal-combustion engine according to Claim 9, wherein said fuel injection means are arranged in said intake device (1).

12. Use of an internal-combustion engine according to one of Claims 9 to 11 for a Miller cycle or an Atkinson cycle.
